# EUROPÄISCHE PATENTSCHRIFT

(11) **EP 2 054 220 B1**
(45) Veröffentlichungstag und Bekanntmachung des Hinweises auf die Patenterteilung: **06.09.2017**
(21) Anmeldenummer: 07801177.2
(22) Anmeldetag: 27.07.2007
(51) Int. Cl.: B32B 5/02, D04H 1/42

(54) **TEXTILE DICHTUNGSBAHN**
TEXTILE SEALING MEMBRANE
BANDE D'ÉTANCHEITÉ TEXTILE

(30) Priorität: 01.08.2006 DE 102006035767; 28.03.2007 DE 202007004516 U; 21.06.2007 DE 202007008688 U
(43) Veröffentlichungstag der Anmeldung: 06.05.2009
(73) Patentinhaber: BNP Brinkmann GmbH & Co. KG, 48477 Hörstel-Bevergern (DE)
(72) Erfinder: Harry Naumann, 48477 Hörstel-Riesenbeck (DE)
(74) Vertreter: Müller-Boré & Partner Patentanwälte PartG mbB
(86) Internationale Anmeldenummer: PCT/DE2007/001336
(87) Internationale Veröffentlichungsnummer: WO 2008/014763

(56) Entgegenhaltungen:
- EP-A- 1 396 573
- EP-A2- 0 296 279
- WO-A-2006/069689
- WO-A-2006/117038
- WO-A1-2005/005703
- DE-A1- 2 721 511
- DE-A1-102004 005 418
- DE-T2- 69 218 780
- DE-U1-202004 020 926
- JP-A- H02 183 911
- US-A- 5 023 131
- US-A- 5 167 764
- US-A- 5 516 580

## Beschreibung

Die Erfindung bezieht sich auf eine der Abdichtung gegenüber Flüssigkeiten dienende Dichtungsbahn.

Unter dem im Nachfolgenden immer wieder verwendeten Ausdruck "Flüssigkeiten" werden im weitesten Umfang Waser und Wasser enthaltende Flüssigkeiten verstanden, die, wenn sie auf hydrophile Fasern treffen, bei den Fasern zu einem feuchtigkeitsabsorbierenden Effekt führen.

Unter dem Begriff "Textilschicht" wird eine aus Fasererzeugnissen gebildete Schicht verstanden, die vorzugsweise als Vlies oder Filz ausgebildet ist, aber auch als Gewebe, Gewirke oder Gelege gestaltet sein kann.

Unter dem Begriff "feuchteabsorbierende Fasern" werden im Nachfolgenden Quellfasern verstanden, die eine hohe Wasseraufnahme ermöglichen, dabei zu einem starken Quellen führen und so einen hohen Quelldruck erzeugen. Hierbei sind Fasern bekanntgeworden, beispielsweise unter dem Handelsnamen "Lyocellfasern", bei denen selbst bei hundertprozentiger Feuchtigkeit die Flüssigkeit in Gänze in der Faser gespeichert wird. Der Quelldruck kann z. B. über 100 kg N. liegen.

Im Stand der Technik sind solche Fasern auch als "Moisture Management Polyester-Fasern" bekannt geworden.

Bisher sind feuchtigkeitsabsorbierende Fasern entweder in der Bekleidung zur Abführung von Körperfeuchtigkeit eingesetzt worden, um einen Kühleffekt beim Verdunsten der Feuchtigkeit zu verhindern oder sie dienten in Hygienetextilien zur Aufnahme von Feuchtigkeit, beispielsweise bei Kindern als Windeln.

So wird in der europäischen Patentschrift 0 599 871 B1 ein absorbierender Artikel, insbesondere Monatsbinde, beschrieben. Diesem Schutzrecht liegt die Aufgabe zugrunde, wegwerfbare, absorbierende Artikel mit verbesserter Fluidabsorption und Retention bereitzustellen. Es ist ein weiteres Ziel dieses Schutzrechtes, derartige Artikel mit verbessertem Fluidtransport weg von der Haut zu versehen und ein besonderes Ziel ist es, Hygienevorlagen und Höscheneinlagen mit Attributen, wie verbesserter Weichheit und Flexibilität zu schaffen, wobei eine verbesserte Passform und eine verbesserte Fleckenreduktion angestrebt wird.

Wesentlich ist bei diesem Vorschlag, dass es nicht darauf ankommt, dass die feuchtigkeitsabsorbierenden Fasern einen Quelldruck erzeugen, sondern sie sollen nur vorgesehen sein, um einen hohen Speichercharakter zu haben und der gemäß diesem Vorschlag geschaffene Artikel soll eine hohe Rückhaltefähigkeit aufweisen, um somit praxisgerechter zu sein.

Der Erfindung liegt demgegenüber die Aufgabe zugrunde, feuchtigkeitsabsorbierende Fasern in vorteilhafter Weise auch dazu auszunutzen, dass mit diesen Fasern ein Dicht-effekt erreicht werden kann.

Zur Lösung dieser Aufgabe wird vorgeschlagen, dass eine Abdichtung gegenüber Flüssigkeiten schaffende textile Dichtungsbahn ausschließlich oder teilweise aus feuchteabsorbierenden Fasern besteht, wobei diese Textilschicht vorzugsweise als Vlies- und/oder Filzschicht ausgebildet ist.

Durch diese Anordnung wird erreicht, dass die der Abdichtung gegenüber Flüssigkeiten dienende Dichtungsbahn, beispielsweise eine Teichfolie, dann, wenn diese Teichfolie beschädigt wird, d. h. an einer Stelle durch Verletzungen wasserdurchlässig wird, nunmehr die in diesem Bereich angeordneten hydrophilen Fasern einer hohen Wasseraufnahme ausgesetzt werden, wobei diese hohe Wasseraufnahme zu einer starken Quellung der Fasern führt. Wird das freie ungehemmte Quellen der Fasern beispielsweise durch entsprechende Auflasten unterbunden oder durch entsprechende Immobilisierungen der Fasern, baut sich ein Quelldruck im Bereich der Verletzung der flüssigkeitsdichten Abdichtung auf und dieser Quelldruck führt bei einem begrenzten Volumen bei entsprechender Aktivität der Fasern zur gewünschten Dichtwirkung.

Das Anwendungsgebiet dieser Dichtungsbahn ist z. B. im Hoch-, Tief- und Kellerbau möglich, im Bereich des Gebäudeschutzes, des Tunnel- und Stollenbaues, im Wasserbau. Diese Dichtungsbahn kann aber auch zum Abdichten von Flachdächern oder auch im Schiffsbau oder bei einem temporären Hochwasserschutz eingesetzt werden.

Auch der Einsatz in Verbindung mit sogenannter weisser Ware und zum Schutz von auslaufenden Autobatterien ist möglich. Grundsätzlich können also Flachdichtungen aus dieser aus Quellfasern aufgebauten Textilschicht hergestellt werden.

Geotextile Dichtungslagen, z. B. aus dem Material "Bentonit" sind bekannt, um eine Abdichtung eines z. B. bestimmten Bodenbereiches zu erzielen. Eine derartige Abdichtung über Matten kann z. B. im Bereich von Baustellen oder Werkstätten erfolgen, um zu verhindern, dass Wasser bzw. weitere unerwünschte Stoffe in den Untergrund eindringen und von dieser abdichtenden Lage, insbesondere Matte, aufgehalten werden. Zwar ermöglichen diese bekannten Bentonit-Matten keine absolute Dichtung, jedoch ermöglichen diese Matten bereits eine weitestgehende Abdichtung. Ein Nachteil der bekannten Bentonit-Lagen oder Bentonit-Matten ist zum einen das hohe Flächengewicht dieser Matten, die den Transport und das Verlegen dieser Matten erschweren bzw. kostenintensiv werden lassen. Zudem ist an diesen Bentonit-Matten nachteilhaft, dass sie nach einem Austrocknen Trockenrisse aufweisen können und an diesen Rissstellen eine erhöhte Durchlässigkeit für Flüssigkeiten aufweisen, d. h. nach wechselnden Trocken/Nasszyklen verlieren die Bentonit-Matten ihre abdichtenden Eigenschaften in hohem Maße. Darüber hinaus kann es bei insbesondere punktuellen Belastungen dieser Bentonit-Matten zu ebenfalls einer Rissbildung und anschließenden Undichtigkeiten kommen.

Durch den erfindungsgemäßen Vorschlag, eine Quellfasern enthaltende Textilschicht als Geotextil einzusetzen, wird erreicht, dass diese Quellfasern Flüssigkeit aufnehmen und aufquellen und durch den dann auftretenden Quelldruck einer Abdichtung im Bereich der Abdichtungsbahn ermöglichen und zumindest den Feuchtigkeitstransport durch die Dichtungsbahn hindurch reduzieren, wenn nicht sogar wirksam unterbrechen. Vorteilhafte Ausgestaltungen sind in den Unteransprüchen erläutert.

In einer anderen Ausführungsform ist die Dichtungsbahn als Gemisch von unterschiedlichen Stoffen ausgebildet, so dass die Quellfasern lediglich einen Anteil am Material der Dichtungsbahn ausbilden, so z. B. in einem Bereich von beinahe 100 % bis 10 % Anteil.

Die neben den Quellfasern weiteren verwandten Materialien sind künstliche Fasern, wie z. B. Polypropylenfasern oder Polyesterfasern, um eine kostengünstige Herstellung der Dichtungsbahn zu erreichen, die zudem im trockenen Zustand sehr leicht ist und daher in einfacher Weise zu transportieren und zu verlegen ist, und die darüber hinaus eine hohe Langzeitabdichtung ermöglichen. Die Herstellung der Dichtungsbahn wird dann erreicht, wenn diese als Quellvlies ausgebildet ist, das bei einfacher Herstellbarkeit einen hohen Quelldruck von größer als 100 kg N. ermöglicht und eine hierdurch bedingte gute Abdichtungseigenschaft. Da ein Anteil an Schmelzfasern beim Quellvlies vorgesehen ist, kann durch eine thermische Fixierung der Fasern erreicht werden, dass bei einer Benetzung der Quellfasern ein sehr hoher Quelldruck mit der damit verbundenen guten Abdichtungseigenschaft erreicht wird. Hierbei wird die Schmelzfasern enthaltende Dichtungsbahn beispielsweise erhitzt, so dass die Schmelzfasern zumindest anschmelzen, dann wird die Dichtungsbahn zusammengedrückt und die Schmelzfasern abgekühlt, so dass eine relativ kompakte feste, aber auch relativ dünne Dichtungsbahn geschaffen wird, die bei Aufnahme der Feuchtigkeit den hohen Quelldruck erzeugt. Beim erstmaligen Erwärmen solcher Fasern auf den Glasumwandlungspunkt, der trocken bei 80° C und feucht deutlich niedriger ist, wird die Faser für die Dauer der Umwandlung weich und klebrig. Berühren nun solche klebrig gewordenen Fasern andere Fasern oder werden sie in diesem Zustand z. B. durch Kalandern an andere Fasern angepreßt, so entsteht eine feste, irrefersible Bindung. Auch erneute Wärmezufuhr löst die Bindung nicht wieder. Bemerkenswert ist noch, dass die Bindestellen fast punktförmig sind, was Griff und Flexibilität des Vliesstoffs positiv beeinflußt.

In vorteilhafter Ausgestaltung weist die Dichtungsbahn zumindest teilweise an ihren Rändern bzw. in ihren Randbereichen mechanische Befestigungsmittel auf, wie z. B. Häkchenverschlüsse, Reissverschlüsse, Knöpfe od. dgl., um z. B. eine textile Dichtungsbahn mit einer benachbart angeordneten geotextilen Dichtungsbahn miteinander zu verbinden.

Die vorgeschlagene Dichtungsbahn ist in Art einer Matte oder Bahn ausgebildet, die beispielsweise mehrere Meter lang und mehrere Meter breit sein kann bei einer Stärke von nur einem oder wenigen Zentimetern. Diese mattenartig ausgebildete Dichtungsbahn kann beispielsweise zu einer Rolle aufgewickelt werden, so dass in einem Ausführungsbeispiel diese Dichtungsbahn eine Breite von einem Meter aufweisen kann und eine Länge von zehn Metern. Selbstverständlich sind unterschiedliche Breiten- und Längenmaße der Dichtungsbahn möglich, je nach Art der abzudichtenden Lokalität.

Das Flächengewicht einer Dichtungsbahn kann z. B. in einem Bereich von 100 g bis 5000 g/m² liegen, je nach gewünschtem Einsatzzweck und gewünschter abdichtender Eigenschaft. Bereits aus diesem Flächengewicht ergibt sich ein wesentlicher Vorteil der erfindungsgemäßen Dichtungsbahn als Geotextil gegenüber der wesentlich schwereren Matte aus Bentonit bei gleichen abdichtenden Eigenschaften. Darüber hinaus kann über das Flächengewicht die abdichtende Eigenschaft eingestellt werden, so dass durch diese in einfacher Weise durchführbare Einstellbarkeit der abdichtenden Eigenschaften auch über das Flächengewicht ein wesentlicher Vorteil gegenüber den bekannten Dichtmatten oder Dichtlagen erhalten wird, bei denen dies in dieser Form nicht möglich ist.

Neben den quellfähigen Fasern und z. B. einer Beimischung von Polypropylen oder sonstigen synthetischen Fasern weist die Dichtungsbahn zudem einen Teil an sogenannten Schmelzfasern auf um eine thermische Fixierung der Fasern untereinander zu ermöglichen. Dies hat den Vorteil, dass durch die thermische Fixierung der Fasern untereinander - nachdem die Fasern Wärme ausgesetzt wurden - ein höherer Quelldruck bei einer Benetzung der Quellfasern mit Feuchtigkeit erfolgt und eine hierdurch bedingte erhöhte Abdichtungsfunk-tion.

In einem Ausführungsbeispiel wird die Dichtungsbahn aus einem Material gebildet, das zu 40 % aus Quellfasern besteht, zu 50 % aus Polypropylen oder sonstigen synthetischen Materialien oder Fasern und zu 10 % aus Schmelzfasern. Selbstverständlich ist dieses Mischungsverhältnis je nach Einsatzzweck variabel.

Ein wesentlicher Vorteil der vorgeschlagenen Dichtungsbahn ist, dass auch bei wiederholten Benetzungs-/Trocknungszyklen die abdichtenden Eigenschaften der Dichtungsbahn erhalten bleiben, beispielsweise im Gegensatz zu den bekannten Bentonit-Matten, die eine Rissbildung bei Trocknungszyklen erfahren können und eine damit verbundene spätere Undichtigkeit bei einer erneuten Benetzung.

Ein weiterer Vorteil der vorgeschlagenen Dichtungsbahn ist, dass sie eine optimale alkalische Beständigkeit aufweist, die insbesondere dann von Bedeutung ist, wenn die Dichtungslage in enger Nachbarschaft zu Beton verwendet wird.

Ein weiterer wesentlicher Vorteil der erfindungsgemäßen Dichtungsbahn ist, dass die vorgeschlagene Dichtungsbahn, insbesondere Matte aus Quellvlies bzw. aus Quellfasern, grundwasserneutral ist und die Kriterien der Lebensmittelechtheit erfüllt. Ein weiterer wesentlicher Vorteil der vorgeschlagenen Dichtungsbahn ist, dass durch diese auch eine Abdichtung im Meerwasserbereich möglich ist.

Es ist z. B. möglich, an der Oberseite oder der Unterseite der Dichtungsbahn weitere Lagen anzuordnen und mit der Dichtungsbahn zu fixieren, so beispielsweise eine oder mehrere durchwurzelungsresistente Lagen, um bei einer Verlegung im Boden eine Beschädigung einer geotextilen Dichtungsbahn durch Wurzelwachstum zu verhindern. Diese durchwurzelungsresistente Lage kann beispielsweise aus einem Netz bestehen oder aus einer weiteren Textilschicht, wie z. B. einer weiteren Vlies- und/oder Filzschicht.

Bei der Kombination der Dichtungsbahn mit einer weiteren wasserundurchlässigen Lage ergibt sich der Vorteil einer Wasserundurchlässigkeit der Dichtungsbahn, die selbst dann gegeben ist, wenn die weitere wasserundurchlässige Lage beschädigt wird, da im Bereich der Beschädigung die Quellfasern durch die Feuchtigkeit aufquellen und den Wasserdurchtritt an der beschädigten Stelle verhindern.

## Patentansprüche

1. Eine der Abdichtung gegenüber Flüssigkeiten dienende Dichtungsbahn, **gekennzeichnet durch** eine feuchteabsorbierende und dabei aufquellende und einen Quelldruck erzeugende Fasern (Quellfasern) enthaltende Textilschicht, wobei lediglich ein Anteil von Quellfasern in der Textilschicht vorgesehen ist und die Textilschicht einen Anteil von Schmelzfasern aufweist,
wobei die Fasern thermisch fixiert sind und
die Dichtungsbahn als Quellvlies mit einem Quelldruck von mehr als 100 kg N ausgebildet ist.

2. Dichtungsbahn nach Anspruch 1, **dadurch gekennzeichnet, dass** die Textilschicht auf der Rückseite einer feuchtigkeitsundurchlässigen Werkstoffbahn angeordnet ist.

3. Dichtungsbahn nach Anspruch 1 oder 2, **dadurch gekennzeichnet, dass** die Textilschicht als Vliesschicht ausgebildet ist.

4. Dichtungsbahn nach Anspruch 1 bis 3, **dadurch gekennzeichnet, dass** die Textilschicht als Filzschicht ausgebildet ist.

5. Dichtungsbahn nach einem oder mehreren der vorhergehenden Ansprüche, **dadurch gekennzeichnet, dass** an den Rändern der Dichtungsbahn zumindest teilweise Befestigungsmittel zur Befestigung von benachbarten Dichtungsbahnen untereinander angeordnet sind.

6. Dichtungsbahn nach einem oder mehreren der vorhergehenden Ansprüche, **dadurch gekennzeichnet, dass** zwei oder mehr Textilschichten übereinander angeordnet sind.

7. Dichtungsbahn nach einem oder mehreren der vorhergehenden Ansprüche, **dadurch gekennzeichnet, dass** die Dichtungsbahn als Membranbahn ausgebildet ist, die eine feuchtigkeitsundurchlässige Werkstoffbahn, eine Quellfasern und Schmelzfasern enthaltende Textilschicht und eine die Textilschicht abdekkende Schutzschicht aufweist.

8. Dichtungsbahn nach Anspruch 7, **dadurch gekennzeichnet, dass** die Werkstoffbahn und/oder die Schutzschicht als Folienschicht ausgebildet ist.

9. Dichtungsbahn nach einem oder mehreren der vorhergehenden Ansprüche, **dadurch gekennzeichnet, dass** die die Quellfasern enthaltende Textilschicht zusätzlich Polyesterfasern und/oder Polypropylenfasern und/oder synthetische Fasern und/oder Polyolefinfasern enthält.

10. Dichtungsbahn nach einem oder mehreren der vorhergehenden Ansprüche, **dadurch gekennzeichnet, dass** die Dichtungsbahn mit einer durchwurzelungsresistenten Lage versehen ist.

11. Verwendung der Dichtungsbahn nach einem oder mehreren der vorhergehenden Ansprüche als geotextile Dichtungsbahn.

## Claims

1. A sealing membrane that serves to seal against liquids, **characterized by** a moisture-absorbing and thereby swelling textile layer that contains fibers that produce a swell pressure (swelling fibers), wherein only a portion of swelling fibers is provided in the textile layer and textile layer partly contains fusion fibers,
wherein the fibers are thermally fused and
the sealing membrane is constructed as a swelling fleece having a swell pressure of more than 100 kg N.

2. Sealing membrane according to Claim 1, **characterized in that** the textile layer is arranged on the back of a moisture-impermeable layer of material.

3. Sealing membrane according to Claim 1 or 2, **characterized in that** the textile layer is constructed as a fleece layer.

4. Sealing membrane according to Claims 1 to 3, **characterized in that** the textile layer is constructed as a felt layer.

5. Sealing membrane according to one or several of the preceding claims, **characterized in that** the sealing membrane has fasteners on at least a portion of its edges for fastening adjacent sealing membranes to one another.

6. Sealing membrane according to one or several of the preceding claims, **characterized in that** two or more textile layers are arranged on top of each other.

7. Sealing membrane according to one or several of the preceding claims, **characterized in that** the sealing membrane is constructed as a membrane layer that comprises a moisture-impenetrable layer of material, a textile layer containing swelling fibers and fusion fibers, and a protective layer covering the textile layer.

8. Sealing membrane according to Claim 7, **characterized in that** the layer of material and/or the protective layer is constructed as a layer of film.

9. Sealing membrane according to one or several of the preceding claims, **characterized in that** the textile layer containing the swelling fibers also contains polyester fibers and/or polypropylene fibers and/or synthetic fibers and/or polyolefin fibers.

10. Sealing membrane according to one or several of the preceding claims, **characterized in that** the sealing membrane is provided with a root-penetration-resistant layer.

11. Use of a sealing membrane according to one or more of the preceding claims as a geotextile sealing membrane.

## Revendications

1. Bande d'étanchéité destinée à étanchéifier vis-à-vis de liquides, **caractérisée par** une couche textile comportant des fibres (fibres gonflantes) absorbant l'humidité et de ce fait gonflant et produisant une pression de gonflement, la couche textile comportant une fraction de fibres gonflantes et une fraction de fibres thermo-fusibles, les fibres étant fixées thermiquement et la bande d'étanchéité consistant en un mat gonflant produisant une pression de gonflement de plus de 100kg N.

2. Bande d'étanchéité selon la revendication 1 **caractérisée en ce que** la couche textile est appliquée sur le dos d'une bande en un matériau imperméable à l'humidité.

3. Bande d'étanchéité selon la revendication 1 ou 2 **caractérisée en ce que** la couche textile consiste en un mat non-tissé.

4. Bande d'étanchéité selon l'une des revendications 1 à 3 **caractérisée en ce que** la couche textile consiste en une couche de feutre.

5. Bande d'étanchéité selon l'une ou plusieurs des revendications précédentes **caractérisée en ce que** des moyens de fixation sont agencés au moins sur une partie des bords de la bande d'étanchéité en vue d'une fixation entre elles de bandes d'étanchéité adjacentes.

6. Bande d'étanchéité selon l'une ou plusieurs des revendications précédentes **caractérisée en ce que** deux ou plusieurs couches textiles sont agencées l'une sur l'autre.

7. Bande d'étanchéité selon l'une ou plusieurs des revendications précédentes **caractérisée en ce qu'**elle consiste en une bande membrane qui comporte une bande en un matériau imperméable à l'humidité, une couche textile comportant des fibres gonflantes et des fibres thermo-fusibles et une couche de protection recouvrant la couche textile.

8. Bande d'étanchéité selon la revendication 7 **caractérisée en ce que** la bande en matériau imperméable et/ou la couche de protection consiste en une couche mince.

9. Bande d'étanchéité selon l'une ou plusieurs des revendications précédentes **caractérisée en ce que** la couche textile comportant les fibres gonflantes comporte par ailleurs des fibres de polyester et/ou des fibres de polypropylène et/ou des fibres synthétiques et/ou des fibres de polyoléfine.

10. Bande d'étanchéité selon l'une ou plusieurs des revendications précédentes **caractérisée en ce qu'**elle est munie d'une couche résistante au perçage par des racines.

11. Utilisation de la bande d'étanchéité selon l'une ou plusieurs des revendications précédentes comme bande d'étanchéité géotextile.
